# EUROPEAN PATENT APPLICATION

(11) **EP 4 454 775 A1**
(43) Date of publication of application: **30.10.2024**
(21) Application number: 24171132.4
(22) Date of filing: 18.04.2024
(51) Int. Cl.: B21D 5/00, B07C 5/00, B21D 5/08, B21D 37/20, B21D 43/20, B21D 53/64, B65B 35/24, B65G 1/10, B21C 47/24, B65H 19/12, B21D 37/14, B21D 43/00

(54) **COILED BLADE STORAGE AND LOADING DEVICE AND METHOD**

(30) Priority: 26.04.2023 GB 202306116
(71) Applicant: Richlytop Ltd, Corby NN18 9EU (GB)
(72) Inventor: Wu, Chang-Ming, CORBY, NN18 9EU (GB)
(74) Representative: Loven, Keith James

(57) **Abstract**

The coiled blade storage and loading device of the present invention comprises a main body support (1), a trays box (2) and a coiled blade loading mechanism (3). The trays box (2) is arranged in the body support (1) and contains a plurality of blade loading trays (201). Each tray (201) is equipped with a blade outlet (21) on the same side. The body support (1) is provided with a lifting mechanism for driving the trays box (2) up and down. The coiled blade loading mechanism is fixed on a side of the body support (1) and corresponds to the position of the blade outlet (21) of the blade loading trays (2). The coiled blade loading mechanism comprises a loading bracket, a sliding support and a blade clamping mechanism. The loading bracket is provided with a telescoping mechanism for driving said sliding support into said trays box (2). The blade clamping mechanism is fixed on one end of the sliding support near the trays box. The blade clamping mechanism comprises a loading active wheel and a loading driven wheel which is capable of compressing to one side of said loading active wheel.

## Description

### Field of the Invention

The present invention relates to the field of the coiled blade storage and loading of an automatic rule bending machine, and more specifically, a coiled blade storage and loading device and to a method of supplying rule or blade to an automatic rule bending machine.

### Background to the Invention

Automatic rule bending machines mainly use a coiled metal strip, typically referred to as a rule or blade, to bend and cut to form a predetermined shape, for example for use in dies for sheet materials such as are used in carton making. Generally the coiled rule or blade is stored in a rule cassette, and the blade is put into the bender by hand. When there is a need to replace the blade with another blade, it is necessary to manually roll the blade back into the rule cassette, take away the rule cassette, replace it with another cassette of blade material, and then repeat the steps to put the blade into the bender. There are also automatic lift tool magazine devices that place two or more cassettes of blades in a tiered magazine, and the cassette is taken away and another cassette of blade is replaced by lifting the magazine instead. However, it is still necessary to manually roll the blade back into the cassette or manually retract the tail blade, command the tool magazine to lift to another level, and repeat the steps of manually placing the blade into the bender. Both of the above methods have to be done by manual placing of the blades and retracting them back, which not only increases the labour intensity of workers, but also has lower processing efficiency.

In existing chain automatic lifting tool magazine devices, the number of loading tool trays usually does not exceed 5 due to the limitation of the weight of the loading tool trays, and requires larger drivers, larger motors and larger gearboxes, which is not conducive to cost control and the use of plant space. Also, in the present chain automatic lifting tool magazine, the high load of driving the tool magazine up and down by the drive chain will result in the breakage of the chain and the tool magazine.

Generally, an existing automatic rule bender is used with a loading device. When the loading device is feeding the blade, there will be a certain bending of the blade, which will affect the processing of the blade, and may affect the subsequent processing quality and efficiency, and the blade delivery position may change. The prior art generally uses a pressure cylinder to connect a pressing block (or connecting rod), and then uses a pressing block (or connecting rod) to connect a pressure wheel. When the pressure cylinder acts, the effect of pressing the blade is achieved through the action of the pressing block (or connecting rod). However, there is a situation where the blade gets stuck in the pressure wheel due to excessive pressure on the blade from the pressure wheel set.

### Summary of the Invention

According to the invention, there is provided a coiled blades storage and loading device, comprising a main body support, a trays box arranged in the body support and containing a plurality of blade loading trays, and a coiled blade loading mechanism, each tray being equipped with a blade outlet on the same side of the trays box, wherein:
the body support is provided with a lifting mechanism for driving the trays box up and down;
the coiled blade loading mechanism is fixed on a side of the body support and corresponds to the position of the blade outlet of the blade loading trays;
the coiled blade loading mechanism comprises a loading bracket, a sliding support and a blade clamping mechanism, the loading bracket being provided with a push and pull mechanism for driving the sliding support into the trays box; and
the blade clamping mechanism is fixed on one end of the sliding support adjacent to the trays box.

The blade clamping mechanism may comprise a loading active wheel and a loading driven wheel which is capable of compressing to one side of the loading active wheel.

Advantageously, the coiled blades loading mechanism further comprises a blade pressure wheel provided on one end of the sliding support away from the trays box, a cylinder for driving the blade pressure wheel up and down, and a locking cylinder for limiting the position of the blade pressure wheel.

The telescoping mechanism may comprise a telescopic cylinder, a telescopic slider and a telescopic slide rail, the telescopic slide rail being provided on the lower face of the sliding support, the telescopic slider being used in conjunction with the telescopic slide rail and being fixedly connected to the loading bracket, one end of the telescopic cylinder being connected to the loading bracket and the other end of the telescopic cylinder being connected to the sliding support.

Advantageously, a blade pressure wheel holder is provided on the sliding support, a blade pressure wheel cylinder support is on the blade pressure wheel holder, the blade pressure wheel cylinder is fixed to the upper face of the blade pressure wheel cylinder support, the blade pressure wheel locking cylinder is fixed to the side of the blade pressure wheel cylinder support, at the upper end of the blade pressure wheel is a connection plate which is connected to the cylinder rod of the blade pressure wheel cylinder, the cylinder rod of the blade pressure wheel locking cylinder is provided with a pressing head to press on the connection plate, the blade pressure wheel being placed inside the blade pressure wheel holder on the top, a transfer wheel being provided inside the blade pressure wheel holder at the bottom, a blade transfer clamp is provided between the transfer wheel and the blade pressure wheel for limiting the position of the blade in transport.

Advantageously, the blade clamping mechanism further comprises an active wheel holder fixed to the upper end of the sliding support and a driven wheel holder which can be slide transversely in the active wheel holder; the loading active wheel being longitudinally located in the active wheel holder and the loading driven wheel being longitudinally located in the driven wheel holder; the active wheel holder being provided with a servo motor at the upper end for driving the loading active wheel; the active wheel holder also being provided with a compression cylinder on the side of the active wheel holder near the loading driven wheel, the compression cylinder having a cylinder rod connected to the driven wheel holder.

Advantageously, the blade clamping mechanism also includes a blade feed guide block located at the sliding support close to one end of the trays box, the blade feed guide block is provided with a blade feed guide slot and a blade feed roller located below the blade feed guide slot.

Advantageously, the coiled blades loading mechanism further comprises a loading straightening mechanism fixed on the loading bracket. Said loading straightening mechanism comprises a straightening support plate located above the sliding support away from the blade clamping mechanism on one side, and a plurality of loading straightening rollers on the straightening support plate in the direction of blade delivery, the plurality of loading straightening rollers comprises fixed loading straightening rollers on both ends of the straightening support plate and moving loading straightening rollers on the middle. Said moving loading straightening rollers is preferably provided with a straightening roller sliding bracket capable of sliding left and right along the straightening support plate, and the loading bracket is also fixed on one side with a moving straightening cylinder for driving the straightening rollers sliding bracket to move left and right.

Advantageously, the lifting mechanism comprises a longitudinally set lifting support panel, fixed pulley assembly, dynamic pulley, counterweight block, lifting drive motor and connecting chain, the lifting support panel on both sides are longitudinally provided with the first linear sliding guide and linear sliding rack; on one side of the trays box is provided with a first lifting slider adapted to the first linear sliding guide; the lifting drive motor is provided with drive gears adapted to the linear sliding rack; the lifting support panel is also longitudinally provided with a second linear sliding guide on the side of the linear sliding rack; the counterweight block and the lifting drive motor are fixedly connected; the fixed pulley assembly includes fixed pulley bracket and two fixed pulleys fixed on the bracket in a line; the bracket for fixed pulley is fixed on the upper end of the body support; the dynamic pulley is fixed above the trays box; one end of the connecting chain is fixed to one end of the fixed pulley bracket, and the other end of the connecting chain passes through the dynamic pulley and two sets of the fixed pulleys in turn and is connected to the lifting drive motor.

Advantageously, the lifting mechanism further comprises chain breakage anti-fall mechanism which includes a bar-shaped limiting stopper, safety claw, hinge support, connecting rod, sliding bracket, push rod and sliding block; the bar-shaped limiting stopper longitudinally set in the lifting support panel with the first linear sliding guide side and the bar-shaped limiting stopper is provided with a plurality of longitudinal distributed fall-prevention blocks; the hinge support is fixed on the upper end of the trays box near the lifting support panel, the safety claw is hinged on the hinge support and is provided with a pulling spring between the hinge support; one end of the safety claw close to the lifting support panel is a locking end, which can be clamped on the fall prevention blocks when the locking end is lifted; the sliding bracket is fixed on the upper end of the trays box and located between the hinge support and the dynamic pulley; the push rod is set laterally sliding on the sliding bracket; the sliding block is provided on the push rod close to the dynamic pulley and against the connecting chain, a compression spring is provided between the sliding block and the sliding bracket; the push rod near the end of the hinge support is provided with a pull hook, the connecting rod is fixed at one end of the safety claw near the sliding bracket, and the connecting rod is provided with a stop bar at the other end extending to both sides, and the pull hook is hung on the stop bar.

Advantageously, there are two first linear sliding guide rails which are arranged in parallel at both ends of the lifting support panel.

Advantageously, one end of the lifting drive motor is fixedly connected to a lifting support seat, the drive gear is arranged in the lifting support seat, and the guide clamping roller is arranged on the lifting support seat; the counterweight block is fixedly connected to the lifting drive motor through a lifting support seat, and the connecting chain is connected to the lifting drive motor through the lifting support seat.

Advantageously, the dynamic pulley and the fixed pulley assembly are set in two rows and parallel, each row of the dynamic pulley and each row of the fixed pulley are a double-row gear structure, and there are four connecting chains, each two of the connecting chains corresponding to a row of fixed pulley and dynamic pulley.

Advantageously, the blade loading tray includes a bottom case, an annular blade guard, a cover plate, blade straightening rollers and manual blade clamping rollers, the manual blade clamping rollers are located in the bottom case near the end of the blade outlet, the annular blade guard is located in the bottom case at the other end, and near the blade outlet side is provided with a notch for blade extension , the annular blade guard is provided with a plurality of guiding rollers at intervals, the cover plate is located above the annular blade guard, the blade straightening rollers are located between the annular blade guard and the manual blade clamping rollers.

Advantageously, the blade loading tray further includes a tail blade retraction mechanism, which includes tail blade clamping rollers and a lotus-shaped gear arranged at the centre of the annular blade guard; the tail blade clamping rollers are arranged between the manual blade clamping rollers and the notch of the annular blade guard, and is in the same line with the manual blade clamping rollers and the blade outlet.

Advantageously, the blade straightening rollers includes positive blade straightening rollers and reverse blade straightening rollers, the positive blade straightening rollers and the reverse blade straightening rollers are symmetrically provided on both sides of the tail blade clamping rollers.

Advantageously, the trays box includes a box support, the two ends of the box support and each the blade loading tray are provided with a set of pull-out guide to pull out the blade loading tray from the side, the blade loading tray is equipped with a pull handle in the pull-out direction. Between each the blade loading tray and the box support is equipped with a locking latch.

Advantageously, the coiled blade storage and loading device further comprising a protective housing, the protective housing surrounding the body support periphery. The upper end of the main body support is also provided with a plurality of lifting rings, and the bottom of the main body support is also provided with a plurality of moving wheels and support feet; the support feet are adjustable support feet. The lower end of the side of the main body support with the blade loading mechanism is also provided with connection fixing blocks.

According to the present invention, a method of supplying rule or blade to an automatic rule bending machine, comprises the steps of:
a) providing a plurality of trays, each containing a coil of the blade or rule material and having a blade outlet through which a leading edge of the blade projects;
b) mounting the trays one above another on a vertical lifting mechanism with the leading edges of the blades all projecting in the same direction;
c) lifting a selected tray to a predetermined loading position, wherein the leading edge of the blade is aligned with a blade loading mechanism;
d) moving a portion of a blade loading mechanism into said tray to engage the leading edge of the blade and drawing the blade out of the tray and into the automatic rule bending machine; and
e) when the rule needs to be replaced, using the blade loading mechanism to withdraw the blade from the rule bending machine into the tray, withdrawing the blade loading mechanism from the tray, and then repeating steps c) and d) to load the blade from another selected tray from said plurality of trays.

The beneficial effects of the present invention are:
1. By the lifting trays box and the blade clamping mechanism that can reach into the trays box, the invention realizes automatic lifting and lowering of the coiled blades, automatically loading the blades into the bender machine, and automatically return the tail blades and retract tail blades, which greatly improves processing efficiency and reduces the workload of workers.
2. The method of multiple chains dynamic pulley traction, with the counterweight block to balance the weight of the trays box, makes the gravity of the trays box components evenly being transferred and dispersed to the aluminium frame through multiple chains, which is conducive to the balanced force of the components of the trays box, conducive to reducing the chain load and enhancing the safety of chain-type tray box traction transmission;
3. The locking mechanism set on the side of the pressure wheel by the blades loading mechanism locks the pressure blade position of the blade pressure wheel to prevent the blade from being stuck into the blade pressure wheel due to the excessive pressure of the blade pressure wheel and to keep the delivery position of the blade from changing.
4. The telescoping mechanism controls the roller to the direction of the trays box to telescopically clamp the blade, and achieve the coiled blade automatic loading and automatic returning by the way of rollers rotation, greatly improve the processing efficiency, reduce the labour intensity of workers

### Brief Description of the Drawings

In the drawings, which illustrate exemplary embodiments of the invention:
Figure 1 is a schematic diagram of the internal structure of the coiled blades storage and loading device;
Figure 2 is a structure schematic diagram of the trays box and lifting mechanism at one angle;
Figure 3 is a structure schematic diagram of the trays box and lifting mechanism at another angle;
Figure 4 is a structure schematic diagram of the chain breakage anti-fall mechanism;
Figure 5 is a structure schematic diagram of the chain breakage anti-fall mechanism at another angle;
Figure 6 is a structure schematic diagram of the coiled blades loading mechanism at one angle;
Figure 7 is a structure schematic diagram of the coiled blades loading mechanism at another angle;
Figure 8 is a schematic diagram of decomposition structure of the blade loading tray; and
Figure 9 is a schematic diagram of an overall structure of the invention.

Reference signs used in the drawings:
1-main body support; 2-trays box; 3-coiled blade loading mechanism 4-protective housing; 5-lifting rings; 6.moving wheels; 7-support feet; 8- connection fixing block; 21- blade outlet; 201-blade loading tray; 202-lifting support panel; 203-fixed pulley assembly; 204-dynamic pulley; 205- counterweight block ; 206-lifting drive motor; 207-connecting chains; 208-first linear sliding guide; 209-second linear sliding guide; 210-sliding rack; 211-bar-shaped limiting stopper; 212-fixed pulley bracket; 213-fixed pulley; 214-fall prevention blocks; 215-safety claw; 216-hinge support; 217-connecting rod; 218-sliding bracket; 219- push rod; 220-sliding block; 221-pulling spring; 222-compression spring; 223-stop bar; 224-pull hook; 225-alarm switch; 226-box support; 227- pull-out guide; 228- pull handle; 229- locking latch; 2011-bottom case; 2012-annular blade guard; 2013-cover plate; 2014-blade straightening rollers; 2015-manual blade clamping rollers; 2016-guiding rollers; 2017- lotus-shaped gear; 2018- tail blade clamping rollers; 301-loading bracket; 302-sliding support; 303-blade clamping mechanism; 304-telescoping mechanism; 305-loading active wheel; 306-loading driven wheel; 307-servo motor; 308-compression cylinder; 309-blade pressure wheel; 310-blade pressure wheel cylinder; 311- blade pressure wheel locking cylinder; 312.blade pressure wheel holder; 313- blade pressure wheel cylinder support; 314-blade transfer clamp; 315-active wheel holder; 316-blade feed guide block; 317-blade feed guide slot; 318-blade feed roller; 319-loading straightening mechanism; 320-straightening support plate; 321-fixed loading straightening rollers; 322-moving loading straightening rollers; 323-straightening roller sliding support; 324-moving straightening cylinder.

### Detailed Description of the Illustrated Embodiment

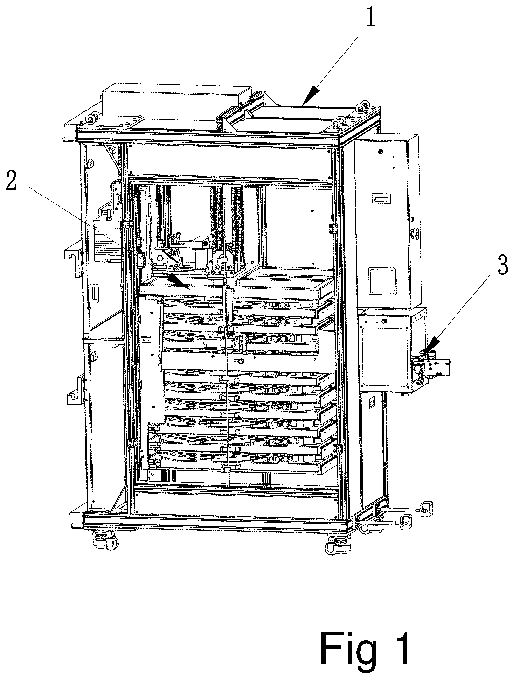

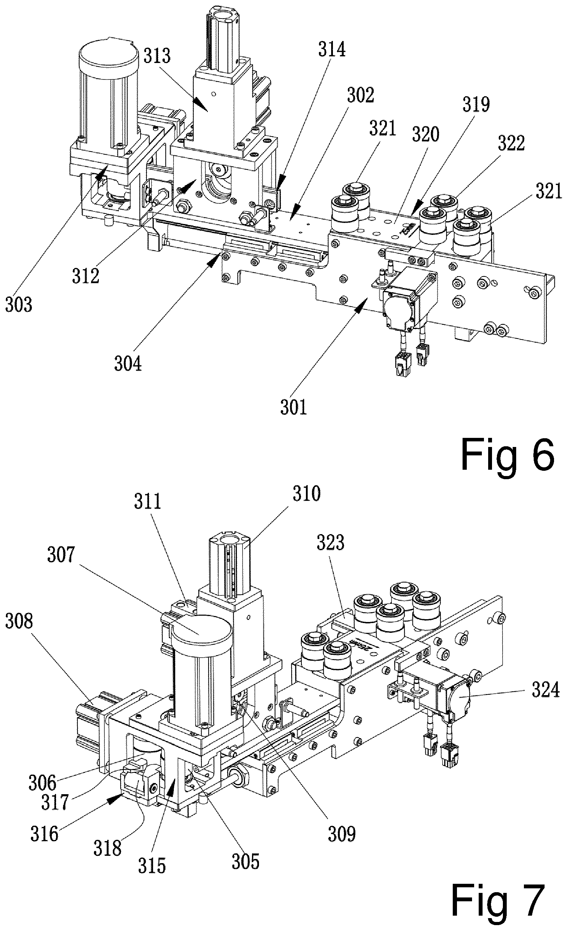

As shown in Figures 1 to 9, the embodiment of the invention discloses a coiled blade storage and loading device, comprising a main body support 1, a trays box 2 and a coiled blade loading mechanism 3; the trays box 2 is arranged in the main body support 1 filled with multiple blade loading trays 201, and every tray 201 is equipped with a blade outlet 21 on the same side; the main body support 1 is provided with a lifting mechanism for driving the trays box 2 up and down. The coiled blade loading mechanism 3 is fixed on a side of the boy support 1 and corresponds to the position of the blade outlet 21 of the blade loading trays 201; the coiled blade loading mechanism 3 comprises a loading bracket 301, a sliding support 302 and a blade clamping mechanism 303; the loading bracket 301 is provided with a telescoping mechanism 304 for driving the sliding support 302 into the trays box 2; the blade clamping mechanism 303 is fixed on one end of the sliding support 302 near the trays box 2; the blade clamping mechanism 303 comprises a loading active wheel 305 and a loading driven wheel 306 which is capable of compressing to one side of the loading active wheel 305; the loading active wheel 305 is driven by servo motor 307, a compression cylinder 308 is provided on one side of the loading driven wheel 306. In some embodiments, servo motor 307 drives a pair of reduction gears to drive the roller to feed the blade, specifically, the blade clamping mechanism 303 also includes mutually meshing drive pinion and drive large gear, the drive large gear and loading active wheel 305 act on the same shaft, in the same shaft is also installed with rolling bearings to reduce the friction loss between the shaft and shaft seat, servo motor 307 drive the drive pinion, drive large gear and drive loading active wheel 305 rotation.

The lifting mechanism drives the trays box 2 to move up and down, so that the selected blade loading tray 201 corresponds to the position of the coiled blade loading mechanism 3, and then the blade clamping mechanism 303 of the coiled blade loading mechanism 3 moves in the direction of the blade outlet 21 of the corresponding blade loading tray 201 in the trays box 2 through the telescoping mechanism 304 until the coiled blade enters between the active wheel 305 and the driven wheel 306; at this time, the loading driven wheel presses 306 is pressed to the side of the loading active wheel 305 through the compression cylinder 308, while the loading active wheel 305 starts to rotate driven by servo motor 307, pulling its blade out of the blade loading tray 201 until it is transported to the bending machine, on the contrary, the unused blade can also be transported back to the loading tray 201, and then select another loading tray 201 to complete the same steps as above.

By the lifting trays box 2 and the blade clamping mechanism 303 that can reach into the trays box 2, the invention realizes automatic lifting and lowering of the coiled blade, automatically loading the blade into the bender machine, and automatically return the tail blade and retract the tail blade, which greatly improves processing efficiency and reduces the workload of workers. In addition, the present invention can adjust the distance between the blade clamping mechanism 303 and the blade outlet 21 and the distance between the blade clamping mechanism 303 and the loading straightening mechanism 319 through the movement of the sliding support 302, which is conducive to the stable clamping and stable transferring of the blades by the coiled blade loading mechanism 3.

In this embodiment, the blade clamping mechanism 303 further comprises an active wheel holder 315 fixed to the upper end of the sliding support 302 and a driven wheel holder which can be slide transversely in the active wheel holder 315; the loading active wheel 305 being longitudinally located in the active wheel holder 315 and the loading driven wheel 306 being longitudinally located in the driven wheel holder; the active wheel holder 315 being provided with a servo motor 307 at the upper end for driving the loading active wheel 305; the active wheel holder 315 also being provided with a compression cylinder 308 on the side of the active wheel holder 315 near the loading driven wheel 306, the compression cylinder 308 having a cylinder rod connected to the driven wheel holder.

In some embodiment, the blade clamping mechanism 303 also includes a blade feed guide block 316 located at the sliding support 302 close to one end of the trays box 2, the blade feed guide block 316 is provided with a blade feed guide slot 317 and a blade feed roller 318 located below the blade feed guide slot 317.

Generally, existing automatic rule benders are used with a loading device. When the loading device is feeding the blade, there will be a certain bending of the blade, which will affect the processing of the blade, and may affect the subsequent processing quality and efficiency, and the blade delivery position may change. The prior art generally uses a pressure cylinder to connect a pressing block (or connecting rod), and then uses a pressing block (or connecting rod) to connect a pressure wheel. When the pressure cylinder acts, the effect of pressing the blade is achieved through the action of the pressing block (or connecting rod). However, there is a situation where the blade gets stuck in the pressure wheel due to excessive pressure on the blade from the pressure wheel set. In some embodiment, the coiled blade loading mechanism 3 further comprises a blade pressure wheel 309 provided on one end of the sliding support 302 away from the trays box 2, a blade pressure wheel cylinder 310 for driving the blade pressure wheel 309 up and down, and a blade pressure wheel locking cylinder 311 for limiting the position of the blade pressure wheel 309. When working, when the blade pressure wheel cylinder 310 drives the blade pressure wheel 309 pressed on the appropriate position of the blade feed by the blade clamping mechanism, the blade pressure wheel locking cylinder 311 presses the knurled presser block in the upper end of the fixed block for the blade pressure wheel 309, so that the blade pressure wheel 309 is locked in a fixed height; with this method, the pressure on the blade by the blade pressure wheel 309 unchanged during the movement, the blade will not be stuck in the compression wheel, the blade pressure wheel 309 also ensures the smooth delivery of the blade.

In this embodiment, a blade pressure wheel holder 312 is provided on the sliding support 302, a blade pressure wheel cylinder support 313 is provided on the blade pressure wheel holder 312, the blade pressure wheel cylinder 310 is fixed on the upper face of the blade pressure wheel cylinder support 313, the blade pressure wheel locking cylinder 311 is fixed to the side of the blade pressure wheel cylinder support 313, at the upper end of the blade pressure wheel 309 is a connection plate which is connected to the cylinder rod of the blade pressure wheel cylinder 310, the cylinder rod of the blade pressure wheel locking cylinder 311 is provided with a pressing head to press on the connection plate, the blade pressure wheel 309 being placed inside the blade pressure wheel holder 312 on the top, a transfer wheel being provided inside the blade pressure wheel holder 312 at the bottom, a blade transfer clamp 314 is provided between the transfer wheel and the blade pressure wheel 309 for limiting the position of the blade in transport.

In this embodiment, the telescoping mechanism 304 comprises a telescopic cylinder, a telescopic slider and a telescopic slide rail, the telescopic slide rail being provided on the lower face of the sliding support 302, the telescopic slider being used in conjunction with the telescopic slide rail and being fixedly connected to the loading bracket 301, one end of the telescopic cylinder being connected to the loading bracket 301 and the other end of the telescopic cylinder being connected to the sliding support 302. Through the telescopic cylinder and telescopic slide, the telescopic slider can accurately and steadily control the work of blade clamping mechanism 303, and realize the function of automatic blade loading, automatic blade return and tail blade retraction, and the structure and control are simple, and the production cost is low.

In some embodiments, the coiled blade loading mechanism 3 further comprises a loading straightening mechanism 319 fixed on the loading bracket 301. Said loading straightening mechanism 319 comprises a straightening support plate 320 located above the sliding support 302 away from the blade clamping mechanism 303 on one side, and a plurality of loading straightening rollers on the straightening support plate 320 in the direction of blade delivery, the plurality of loading straightening rollers comprises fixed loading straightening rollers 322 on both ends of the straightening support plate 320 and moving loading straightening rollers 322 on the middle. Said moving loading straightening rollers 322 is provided with a straightening roller sliding bracket 323 capable of sliding left and right along the straightening support plate 320, and the loading bracket 301 is also fixed on one side with a moving straightening cylinder 324 for driving the straightening rollers sliding bracket 323 to move left and right.

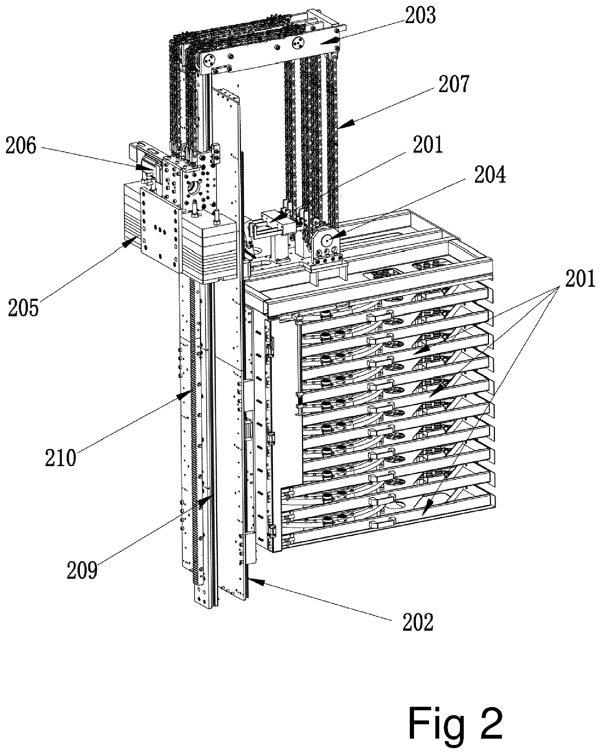

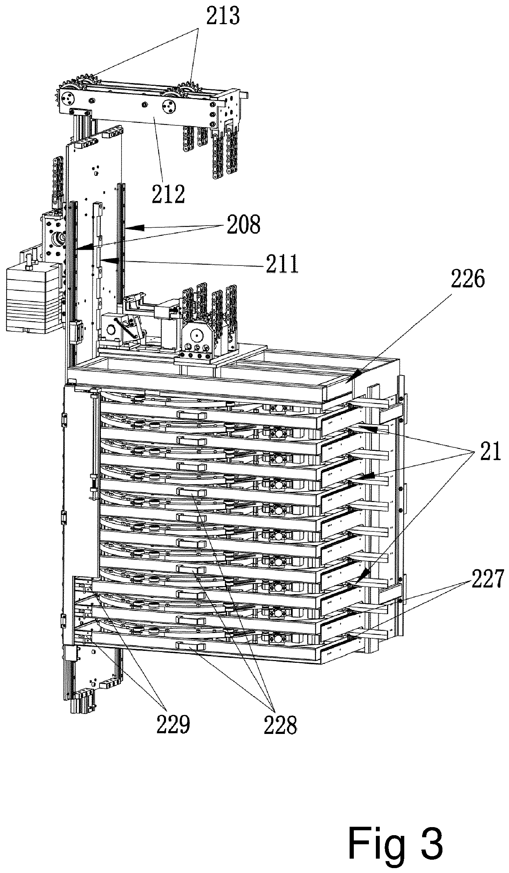

In this embodiment, referring to Figures 2 and 3, the lifting mechanism comprises a longitudinally set lifting support panel 202, fixed pulley assembly 203, dynamic pulley 204, counterweight block 205, lifting drive motor 206 and connecting chains 207, the lifting support panel 202 on both sides are longitudinally provided with the first linear sliding guide 208 and linear sliding rack 210, on one side of the trays box 2 is provided with a first lifting slider adapted to the first linear sliding guide 208, the lifting drive motor 206 is provided with drive gears adapted to the linear sliding rack 210, the lifting support panel 202 is also longitudinally provided with a second linear sliding guide 209 on the side of the linear sliding rack 210, the counterweight block 205 and the lifting drive motor 206 are fixedly connected, the fixed pulley assembly 203 includes fixed pulley bracket 212 and two fixed pulleys 213 fixed on the fixed pulley bracket 212 in a line, the fixed pulley bracket 212 is fixed on the upper end of the body support 1,; the dynamic pulley 204 is fixed above the trays box 2, in this embodiment, dynamic pulley 204 is fixedly connected to the centre of gravity of the automatic lifting trays box; one end of the connecting chains 207 is fixed to one end of the fixed pulley bracket 212, and the other end of the connecting chains 207 passes through the dynamic pulley 204 and two sets of the fixed pulleys 213 in turn and is connected to the lifting drive motor. The lifting mechanism of the invention arranges the heavier trays box parts on one side of the lifting support panel, the lifting drive motor and counterweight block on the other side of the lifting support panel, and the dynamic pulley is fixed and installed at the centre of gravity of the trays box, so that the gravity of the trays box parts can be evenly transferred and dispersed to the whole machine body frame through multiple chains, which is not only conducive to optimizing the balance of forces on the trays box parts and enhancing the safety of chain-type trays box traction drive, but also can reduce the driving load of the lifting drive motor, thus relatively reducing the height of the lifting mechanism, simplifying the whole machine structure and reducing the whole machine manufacturing cost.

In this embodiment, one end of the lifting drive motor 206 is fixedly connected to a lifting support seat, the drive gear is arranged inside the lifting support seat, and the guide clamping roller is arranged on the lifting support seat; the counterweight block 205 is fixedly connected to the lifting drive motor 206 through a lifting support seat, and the connecting chains 207 is connected to the lifting drive motor 206 through the lifting support seat.

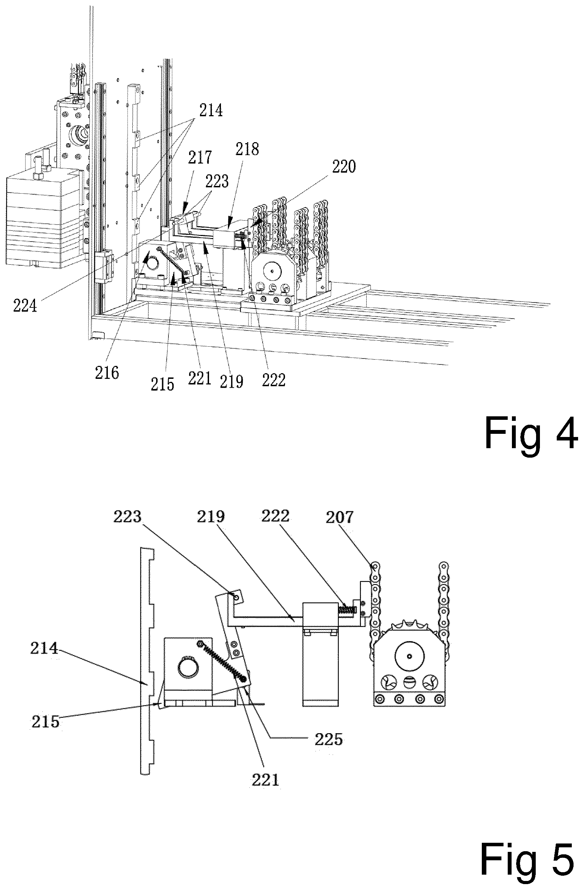

Referring particularly to Figures 4 and 5, the lifting mechanism further comprises chain breakage anti-fall mechanism which includes a bar-shaped limiting stopper 211, safety claw 215, hinge support 216, connecting rod 217, sliding bracket 218, push rod 219 and sliding block 220; the bar-shaped limiting stopper 211 longitudinally set in the lifting support panel 202 on the first linear sliding guide 208 side and the bar-shaped limiting stopper 211 is provided with a plurality of longitudinal distribution of fall prevention blocks 214; the hinge support 216 is fixed on the upper end of the trays box 2 near the lifting support panel 202, the safety claw 215 is hinged on the hinge support 216 and is provided with a pulling spring 216; one end of the safety claw 215 close to the lifting support panel 202 is a locking end, which can be clamped on the fall prevention blocks 214 when the locking end is lifted; the sliding bracket 218 is fixed on the upper end of the trays box 2 and located between the hinge support 216 and the dynamic pulley 204; the push rod 219 is set laterally sliding on the sliding bracket 218; the sliding block 220 is provided on the push rod 219 close to the dynamic pulley 204 and against the connecting chains 207, a compression spring 222 is provided between the sliding block 204 and the sliding bracket 218; the push rod 219 near the end of the hinge support 216 is provided with a pull hook224, the connecting rod 217 is fixed at one end of the safety claw 215 near the sliding bracket 218, and the connecting rod 217 is provided with a stop bar 223 at the other end extending to both sides, and the pull hook 224 is hung on the stop bar 223.

In some embodiment, there are two first linear sliding guide rails 208 which arranged in parallel at both ends of the lifting support panel 202, so as to have a better guiding and limiting effect, and can make the trays box 2 lift smoothly.

As shown in Figures 2 and 3, the dynamic pulley 204 and the fixed pulley assembly 203 are set in two rows in parallel, each row of the dynamic pulley 204 and each row of the fixed pulley 213 are double-row gear structure, there are four connecting chains, each two the connecting chains corresponds to a row of fixed pulley 213 and dynamic pulley 204, so as to reduce the force on the chain traction structure and improves the safety of lifting the trays box 2.

Under normal conditions, the sliding block 220 (Figure 4) is blocked by the connecting chains 207, so that the pull hook 224 of the push rod 219 will not pull the connecting rod 217, and the connecting rod 217 and the safety claw 215 are in the upper position under the action of the pulling spring 221, while the locking end of the safety claw 215 is in the lower position, at this time the locking end will not contact with the bar-shaped limiting stopper 211, and the trays box 2 can be lifted and lowered as normal. Under the conditions that the connecting chains 207 breaks, the sliding block 220 and push rod 219 will slide towards one side of the dynamic pulley 204 under the action of the compression spring 222, and the pull hook 224 on the other end of the push rod 219 will synchronously pull the stop rod 223 on the connecting rod 217 to rotate downwards, and the locking end of the safety pawl 215 will rotate upwards; when the trays box 2 falls, the locking end of the safety pawl 215 will be stuck on the fall-prevention blocks 214 on the bar-shaped limiting stopper 211 on one side, and prevent the trays box 2 from falling. This is safer.

As shown in Figure 5, an alarm switch 225 can also be provided under one end of the safety claw 215. When the connecting chains 207 breaks, the safety claw 215 at one end of the connecting rod 217 will rotate downward, which will then trigger the alarm switch 225, thus alerting the equipment breakdown or allowing the shutdown of the machine directly.

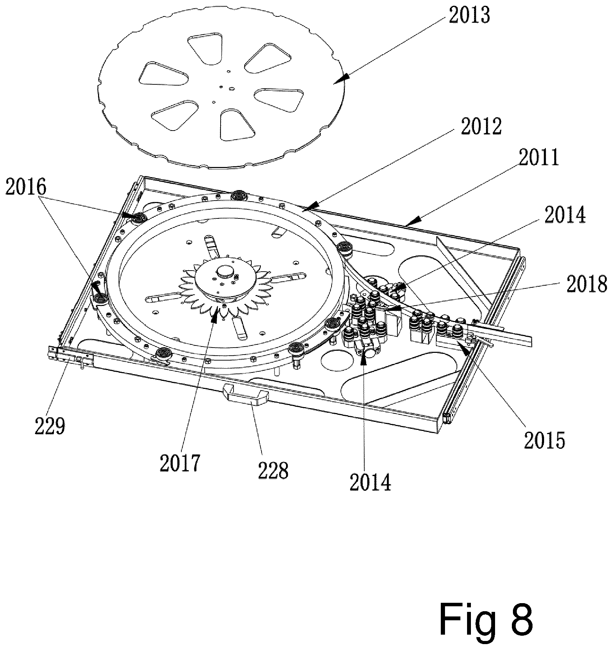

Referring to Figure 8, the blade loading tray 201 includes a bottom case 2011, an annular blade guard 2012, a cover plate 2013, blade straightening rollers 2014 and manual blade clamping rollers 2015; the manual blade clamping rollers 2015 are located in the bottom case 2011 near the end of the blade outlet 21; the annular blade guard 2012 is located in the bottom case 2011 at the other end, and near the blade outlet 21 side is provided with a notch for blade extension; the annular blade guard 2012 is provided with a plurality of guiding rollers 2016 at intervals; the cover plate 2013 is located above the annular blade guard 2012; the blade straightening rollers 2014 are located between the annular blade guard 2012 and the manual blade clamping rollers 2015; the coiled blade is provided in the annular blade guard 2012 under the cover plate 2013; the blade passes through the notch, and is straightened by the blade straightening rollers 2014 and installed into the manual blade clamping rollers 2015,and passes through the blade outlet 21 finally, and prepared for enter into bending machine. Of course, the blade loading tray 201 can not only achieve automatic blade output, but also achieve automatic blade retraction or return.

In this embodiment, the blade loading tray 201 further includes a tail blade retraction mechanism, which includes tail blade clamping rollers 2018 and a lotus-shaped gear 2017 arranged at the centre of the annular blade guard 2012; the tail blade clamping rollers 2018 are arranged between the manual blade clamping rollers 2015 and the notch of the annular blade guard 2012 and is in the same line with the manual blade clamping rollers 2015 and the blade outlet 21. When the blade is used to the end, due to the structural limitations of the bender, there is a section of the tail blade can no longer be used, the tail blade needs to be retracted. Said blade loading tray 201 is provided with a tail blade clamping rollers 2018 and a lotus-shaped gear 2017, the tail blade can be returned to the blade loading tray 201 by the blade clamping mechanism 303, passing through the blade outlet 21, manual blade clamping rollers 2015, tail blade clamping rollers 2018 and into the annular blade guard 2012; at this time, the front end of the tail blade presses against the lotus-shaped gear 2017 and is inserted into the tooth groove of the lotus-shaped gear 2017 along with the curved surface, and drives the lotus-shaped gear 2017 to rotate or is guided diagonally by the lotus-shaped gear 2017 at a large angle to press on the annular blade guard 2012, and then the blade is bent after being stressed, and moves along the inner wall of the annular blade guard 2012 and the guiding rollers 2016, to realize the retraction of the tail blade. Without the guide of the lotus-shaped gear 2017, the blade loading tray 201 is not easy to rotate, the resistance of the blade loading is very large, and the tail blade retraction function cannot be realized.

In this embodiment, the blade straightening rollers 2014 includes positive blade straightening rollers and reverse blade straightening rollers, the positive blade straightening rollers and the reverse blade straightening rollers are symmetrically provided on both sides of the tail blade clamping rollers 2018. It is possible to select positive blade straightening rollers and reverse blade straightening rollers for different blade-out requirements as needed.

Referring again to Figure 3, the trays box 2 includes a box support 226, the two ends of the box support 226 and each the blade loading tray 201 are provided with a set of pull-out guide 227 to pull out the blade loading tray 201 from the side, the blade loading tray 201 is equipped with a pull handle 228 in the pull-out direction, it is convenient and quick to pull out blade loading tray 201 from one side for loading blade by the pull handle 228.

In some embodiments, between each the blade loading tray 201 and the box support 206 is equipped with a locking latch, which can limit the position of the blade loading tray 201 and prevent the trays from coming out accidentally. In this embodiment, there are ten blade loading trays 201 in the trays box 2, which can meet the needs of most bending machines.

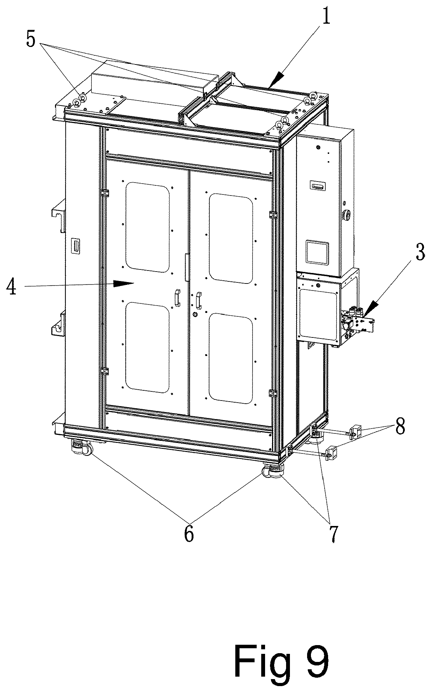

As shown in Figure 9, the coiled blade storage and loading device further comprising a protective housing 4, the protective housing 4 surrounding the body support 1 periphery to protect against dust and internal mechanisms.

In some embodiments, the upper end of the main body support 1 is also provided with a plurality of lifting rings 5, and the bottom of the main body support 1 is also provided with a plurality of moving wheels 6 and support feet 7; the moving wheels 6 are for the movements of the device and the support feet 7 are for the stable support of the device, the support feet 7 is liftable and adjustable. The lower end of one side of the main body support 1 with the blade loading mechanism is also provided with connection fixing blocks 8, which is used for the fixed connection with bending machine and ensure the stable blade loading.

According to the present invention, a method for using the coiled blade storage and loading device provides for the steps of:
S1: Manually load the coiled blade into each blade loading tray 201 separately and pull out a section of the beginning end of a coiled blade out of the blade outlet 2;
S2: Install the blade loading trays 201 into the trays box 2 in turn;
S3: The lifting mechanism drives the trays box 2 to move up and down, so that the blade outlet 201 of the selected blade loading tray 201 corresponds to the position of the coiled blade loading mechanism 3;
S4: The blade clamping mechanism 303 of the coiled blade loading mechanism 3 moves in the direction of the blade outlet 2 of the corresponding blade loading tray 201 in the trays box 2 through the telescoping mechanism 304 until the beginning end of the coiled blade enters between the active wheel 305 and the driven wheel 306;
S5: The loading driven wheel 306 is presses to the side of the loading active wheel 305
   through the compression cylinder 308, while the loading active wheel 305 starts to rotate, pulling its blade out of the blade loading tray 201 until it is transported to the bending machine, completing the loading of the coiled blade;
S6: When the bending machine needs to select coiled blade in other blade loading tray, the coiled blade loading mechanism 3 will first use the blade clamping mechanisms to send its current blade back to the loading tray, and then the lifting mechanism moves up and down to the corresponding position to make the blade outlet 2 of the other selected blade loading tray 201 corresponds to the loading mechanism, and then proceed the loading operation in S4 and S5.

In addition, a method of tail blade retraction for using the coiled blade storage and loading device according to the present invention provides for the steps of :
S1: The blade clamping mechanism of the coiled blade loading mechanism 3 moves in the direction of the blade outlet 2 of the corresponding blade loading tray 201 in the trays box 2 through the telescoping mechanism 304 until the tail blade is returned into the blade outlet 2 of the blade loading tray 201;
S2: The tail blade passes through the blade outlet 21, the manual blade clamping rollers 2015, the tail blade clamping rollers 2018, and enters into the annular blade guard 2012 until the front end of the tail blade presses against the lotus-shaped gear 2017 ;
S3: The front end of the tail blade is inserted into the tooth groove of the lotus-shaped gear 2017 along with the curved surface, and drives the lotus-shaped gear 2017 to rotate or is guided diagonally by the lotus-shaped gear 2017 at a large angle to press on the annular blade guard 2012, and the blade is bent after being stressed, and moves along the inner wall of the annular blade guard 2012 and the guiding rollers 2016, to realize the retraction of the tail blade.

The present invention can set up a multiple blade loading trays 201 and automatically lift and select the corresponding blade loading tray 201. Moreover, the blade loading tray 201 can also achieve the function of retracting the tail blade. The blade clamping mechanism 303 can achieve automatic loading, returning, and retracting the tail blade, greatly improving processing efficiency and reducing labour intensity of workers.

The above is a further detailed description of the present invention in combination with the accompanying drawings of the embodiments. Obviously, the described embodiments are only a part of the embodiments, but not all of them. Based on the embodiments of the disclosure, all other embodiment obtained by a person of ordinary skill in that art without creative efforts fall within the scope of protection of the disclosure.

## Claims

1. A coiled blade or rule storage and loading device, comprising a main body support, a trays box arranged in the body support and containing a plurality of blade loading trays, and a coiled blade loading mechanism, each tray being equipped with a blade outlet on the same side of the trays box, wherein:
the body support is provided with a lifting mechanism for driving the trays box up and down;
the coiled blade loading mechanism is fixed on a side of the body support and corresponds to the position of the blade outlet of the blade loading trays;
the coiled blade loading mechanism comprises a loading bracket, a sliding support and a blade clamping mechanism, the loading bracket being provided with a push and pull mechanism for driving the sliding support into the trays box; and
the blade clamping mechanism is fixed on one end of the sliding support adjacent to the trays box.

2. A device according to Claim 1, wherein the blade clamping mechanism comprises a loading active wheel and a loading driven wheel which is capable of compressing to one side of the loading active wheel.

3. A device according to Claim 1 or 2, wherein the coiled blade loading mechanism further comprises a blade pressure wheel provided on one end of the sliding support away from the trays box, a cylinder for driving the blade pressure wheel up and down, and a locking cylinder for limiting the position of the blade pressure wheel.

4. A device according to Claim 3, comprising a blade pressure wheel holder on the sliding support, a blade pressure wheel cylinder support on the blade pressure wheel holder, the blade pressure wheel cylinder being fixed to the upper face of the blade pressure wheel cylinder support, and the blade pressure wheel locking cylinder being fixed to the side of the blade pressure wheel cylinder support, a connection plate at the upper end of the blade pressure wheel is connected to the cylinder rod of the blade pressure wheel cylinder, the cylinder rod of the blade pressure wheel locking cylinder is provided with a pressing head to press on the connection plate, the blade pressure wheel being placed inside the blade pressure wheel holder on the top, a transfer wheel being provided inside the blade pressure wheel holder at the bottom, and a blade transfer clamp is provided between the transfer wheel and the blade pressure wheel for limiting the position of the blade in transport.

5. A device according to Claim 2, wherein the blade clamping mechanism further comprises an active wheel holder fixed to the upper end of the sliding support and a driven wheel holder which can slide transversely in the active wheel holder, the loading active wheel being longitudinally located in the active wheel holder and the loading driven wheel being longitudinally located in the driven wheel holder, the active wheel holder being provided with a servo motor at the upper end for driving the loading active wheel, the active wheel holder also being provided with a compression cylinder on the side of the active wheel holder adjacent to the loading driven wheel, the compression cylinder having a cylinder rod connected to the driven wheel holder.

6. A device according to any preceding claim, wherein the push and pull mechanism is a telescoping mechanism comprises a telescopic cylinder, a telescopic slider and a telescopic slide rail, the telescopic slide rail being provided on the lower face of the sliding support, the telescopic slider being used in conjunction with the telescopic slide rail and being fixedly connected to the loading bracket, one end of the telescopic cylinder being connected to the loading bracket and the other end of the telescopic cylinder being connected to the sliding support.

7. A device according to any preceding claim, wherein the blade clamping mechanism also includes a blade feed guide block located at the sliding support close to one end of the trays box, the blade feed guide block being provided with a blade feed guide slot and a blade feed roller located below the blade feed guide slot.

8. A device according to any preceding claim, wherein:
the lifting mechanism comprises a longitudinally set lifting support panel, fixed pulley assembly, dynamic pulley, counterweight block, lifting drive motor and connecting chain;
the lifting support panel on both sides is longitudinally provided with a first linear sliding guide and a linear sliding rack;
on one side of the trays box there is provided a first lifting slider adapted to the first linear sliding guide;
the lifting drive motor is provided with drive gears adapted to engage the linear sliding rack;
the lifting support panel is also longitudinally provided with a second linear sliding guide on the side of the linear sliding rack;
the counterweight block and the lifting drive motor are fixedly connected;
the fixed pulley assembly includes a fixed pulley bracket and two fixed pulleys fixed on the bracket in a line;
the bracket for the fixed pulley is fixed on the upper end of the body support;
the dynamic pulley is fixed above the trays box; and
one end of the connecting chain is fixed to one end of the fixed pulley bracket, and the other end of the connecting chain passes through the dynamic pulley and two sets of the fixed pulleys in turn and is connected to the lifting drive motor.

9. A device according to Claim 8, wherein:
the lifting mechanism further comprises a chain breakage anti-fall mechanism which includes a bar-shaped limiting stopper, a safety claw, a hinge support, a connecting rod, a sliding bracket, a push rod and a sliding block;
the bar-shaped limiting stopper is longitudinally set in the lifting support panel with the first linear sliding guide side, and the bar-shaped limiting stopper is provided with a plurality of longitudinal distributed fall prevention blocks;
the hinge support is fixed on the upper end of the trays box near the lifting support panel;
the safety claw is hinged on the hinge support and is provided with a pulling spring between the hinge support;
one end of the safety claw close to the lifting support panel is a locking end, which can be clamped on the fall prevention blocks when the locking end is lifted;
the sliding bracket is fixed on the upper end of the trays box and located between the hinge support and the dynamic pulley;
the push rod is set laterally sliding on the sliding bracket;
the sliding block is provided on the push rod close to the dynamic pulley and against the connecting chain, a compression spring is provided between the sliding block and the sliding bracket;
the push rod near the end of the hinge support is provided with a pull hook;
the connecting rod is fixed at one end of the safety claw near the sliding bracket; and
the connecting rod is provided with a stop bar at the other end extending to both sides, and the pull hook is hung on the stop bar.

10. A device according to Claim 8 or 9, wherein the dynamic pulley and the fixed pulley assembly are set in two rows and parallel, each row of the dynamic pulley and each row of the fixed pulley are a double-row gear structure, and there are four connecting chains, each two of the connecting chains corresponding to a row of fixed pulley and dynamic pulley.

11. A device according to any preceding claim, wherein each blade loading tray includes a bottom case, an annular blade guard, a cover plate, blade straightening rollers and manual blade clamping rollers, and wherein:
the manual blade clamping rollers are located in the bottom case near the end of the blade outlet;
the annular blade guard is located in the bottom case at the other end;
the annular blade guard is provided with a plurality of guiding rollers at intervals and an opening or notch through which the blade can extend;
the cover plate is located above the annular blade guard; and
the blade straightening rollers are located between the annular blade guard and the manual blade clamping rollers.

12. A device according to Claim 11, wherein the blade loading tray further includes a tail blade retraction mechanism, which includes tail blade clamping rollers and a lotus-shaped gear arranged at the centre of the annular blade guard; and the tail blade clamping rollers are arranged between the manual blade clamping rollers and the notch of the annular blade guard, and is in the same line with the manual blade clamping rollers and the blade outlet.

13. A device according to Claim 12, wherein the blade straightening rollers includes positive blade straightening rollers and reverse blade straightening rollers, the positive blade straightening rollers and the reverse blade straightening rollers are symmetrically provided on both sides of the tail blade clamping rollers.

14. A device according to any preceding claim, wherein the trays box includes a box support, the two ends of the box support and each of the blade loading trays are provided with a set of pull-out guide to pull out the blade loading tray from the side, and each blade loading tray is equipped with a pull handle in the pull-out direction.

15. A method of supplying rule or blade to an automatic rule bending machine, comprising the steps of:
a) providing a plurality of trays, each containing a coil of the blade or rule material and having a blade outlet through which a leading edge of the blade projects;
b) mounting the trays one above another on a vertical lifting mechanism with the leading edges of the blades all projecting in the same direction;
c) lifting a selected tray to a predetermined loading position, wherein the leading edge of the blade is aligned with a blade loading mechanism;
d) moving a portion of a blade loading mechanism into said tray to engage the leading edge of the blade and drawing the blade out of the tray and into the automatic rule bending machine; and
e) when the rule needs to be replaced, using the blade loading mechanism to withdraw the blade from the rule bending machine into the tray, withdrawing the blade loading mechanism from the tray, and then repeating steps c) and d) to load the blade from another selected tray from said plurality of trays.
